(19) Europäisches Patentamt

European Patent Office

Office européen des brevets

(11) **EP 4 682 482 A1**

(12) **DEMANDE DE BREVET EUROPEEN**

(43) Date de publication:
**21.01.2026 Bulletin 2026/04**

(21) Numéro de dépôt: **25189992.8**

(22) Date de dépôt: **16.07.2025**

(51) Classification Internationale des Brevets (IPC):
*G01F 19/00* (2006.01)    *B65D 21/08* (2006.01)

(52) Classification Coopérative des Brevets (CPC):
**G01F 19/007; B65D 21/083**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **16.07.2024 FR 2407782**

(71) Demandeur: **Doseat**
**44700 Orvault (FR)**

(72) Inventeur: **RAFFIN, Thierry**
**44700 ORVAULT (FR)**

(74) Mandataire: **Oak & Fox**
**18-20, rue du Faubourg du Temple**
**75011 Paris (FR)**

(54) **ENSEMBLE DE DOSAGE DE NOURRITURE ET PROCÉDÉ DE FORMATION D'UN RÉCIPIENT DOSEUR**

(57) Ensemble de dosage (1) pour le dosage de nourriture comprenant N corps (10, 20, 30) comprenant une base (10), la base (10) comprenant un fond, et une pluralité de corps annulaires (20), les N corps (10, 20, 30) étant assemblables de façon séparable par coopération de forme entre lesdits corps (10, 20, 30) en étant empilés selon un axe (x), de sorte à permettre de former un récipient (100) pour le dosage de nourriture délimitant une cavité (50) destinée à recevoir de la nourriture, le récipient (100) étant constitué de C corps empilés, pris parmi les N corps, empilés selon l'axe x et assemblés de façon séparable par coopération de forme entre les C corps empilés, C étant l'un quelconque du ou des nombres entiers compris entre 2 et N, les C corps empilés comprenant la base dont le fond forme un fond de la cavité et au moins un des corps annulaires (20).

FIG. 1

## Description

### Domaine technique

L'invention se rapporte au dosage de nourriture. L'invention se rapporte plus particulièrement au dosage de nourriture pour animaux carnivores domestiques, notamment les chiens et chats.

La grande majorité des chiens et chats mangent des croquettes. En effet, c'est un aliment bon marché, fiable et pratique (facile à stocker, moins fragile que les aliments humides, alimentation complète toute prête). Cependant, la fabrication des croquettes nécessite au moins 20% d'amidon. Cet amidon apporte beaucoup de calories. Il est essentiellement transformé en graisses par le chat. Par ailleurs, les croquettes sont fabriquées en déshydratant la viande, le poisson, les légumes et les féculents. Elles présentent donc un volume d'eau réduit par rapport aux aliments non transformés. Ainsi, le volume journalier préconisé en croquettes est très faible par rapport à une ration faite de viande, légumes, féculents, pour les mêmes apports. A titre d'exemple, la ration ménagère d'un chat est de 250 grammes alors qu'elle de 50 g en croquettes. Pour nourrir leur animal, les propriétaires, comme ils le font pour leur alimentation, se fient au volume d'aliment. En donnant des croquettes à leur animal, ils jugent instinctivement que le volume est trop faible et donnent systématiquement plus que la dose conseillée sur les emballages.

Or, compte tenu du faible poids de la majorité des carnivores domestiques en comparaison du nôtre, une erreur dans le dosage des croquettes, même minime si elle répétée sur plusieurs semaines à plusieurs années, a des conséquences rapides et importantes sur la masse graisseuse de l'animal. À titre d'exemple, un excès de 50 grammes de croquettes revient à donner 250 grammes de ration ménagère en trop soit le double de la ration journalière préconisée pour un chat. Ainsi, on estime qu'entre 30 et 60 % des chiens et chats sont en surpoids ou obèses en France. Les pathologies dues au surpoids sont systématiques, invalidantes, parfois très graves, coûteuses et contraignantes pour les propriétaires. L'espérance de vie de ces animaux est systématiquement réduite. C'est donc un sujet de préoccupation majeure des vétérinaires pour préserver la santé de leurs patients.

Par conséquent, les croquettes doivent être dosées précisément tous les jours et toute la vie de l'animal. Les croquettes doivent donc être le plus souvent dosées avec une certaine précision, à 5 grammes près pour le chat.

La dose devant être donnée à un animal dépend de nombreux paramètres (le poids actuel de l'animal, son poids de forme, son activité physique, si l'animal est stérilisé ou non, s'il mange exclusivement des croquettes ou d'autres aliments).

### Art antérieur

Actuellement il existe plusieurs techniques de rationnement.

Une première technique consiste à utiliser une balance. Toutefois, cette technique est contraignante au quotidien et chronophage.

La technique la plus fréquente consiste à utiliser un verre doseur du fabricant de croquettes, souvent vendu avec le paquet de croquettes. Cette technique est simple et rapide, mais source de nombreuses erreurs. En effet, un verre doseur est adapté à une seule marque de croquettes.

Il existe également des verres doseurs adaptés à différentes marques de croquettes présentant des repères différents pour les différentes marques de croquettes. Toutefois, ces verres présentent de nombreux repères horizontaux correspondant chacun à une masse p d'un type de croquettes d'une marque. Les propriétaires ont du mal à repérer le bon marquage et les dépassent souvent, car ils ne prennent pas le temps d'ajuster la dose et qu'il n'y a pas de limite physique au remplissage. Par ailleurs, même en s'appliquant, il y a toujours une erreur liée à la quasi-impossibilité de respecter un niveau dans un verre à partir d'une marque horizontale de quelques millimètres de longueur.

Plus récemment sont apparus les distributeurs programmables automatiques. Ils constituent une solution pratique et relativement fiable, mais leur coût est très élevé, ils sont volumineux et difficilement transportables et peuvent s'avérer difficile à régler.

Il existe un besoin d'une solution permettant un dosage d'une quantité réglable prédéterminée de croquettes.

Selon un aspect, on propose un ensemble de dosage pour le dosage de nourriture comprenant N corps comprenant une base, la base comprenant un fond, et une pluralité de corps annulaires, les N corps étant assemblables de façon séparable par coopération de forme entre lesdits corps en étant empilés selon un axe, de sorte à permettre de former un récipient pour le dosage de nourriture, le récipient délimitant une cavité destinée à recevoir de la nourriture, le récipient étant constitué de C corps empilés, pris parmi les N corps, empilés selon l'axe x et assemblés de façon séparable par coopération de forme entre les C corps empilés, C étant l'un quelconque du ou des nombres entiers compris entre 2 et N, les C corps empilés comprenant la base dont le fond forme un fond de la cavité et au moins un des corps annulaires.

Selon un mode de réalisation, un des N corps est un couvercle comprenant un capot configuré et agencé de sorte que lorsque les C corps empilés comprennent le capot, la cavité étant fermée.

Selon un mode de réalisation, chacun des N corps comprend une jupe comprenant une surface interne globalement cylindrique entourant un axe du corps et/ou un col comprenant une surface externe globalement cylindrique entourant l'axe du corps de sorte que pour chaque couple d'un premier corps et d'un deuxième corps pris parmi les C corps empilés du récipient du récipient et étant assemblés de façon démontable par coopération de forme entre le premier corps et le deuxième corps, le col du premier corps est reçu dans le volume délimité par la surface interne de la jupe du deuxième corps et le premier corps et le deuxième corps sont assemblés par coopération de forme entre le col du premier corps et la jupe du deuxième corps.

Selon un mode de réalisation, la surface interne de la jupe du deuxième corps comprend un premier filetage et la surface externe du col du premier corps comprend un deuxième filetage coopérant avec le premier filetage.

Selon un mode de réalisation, la surface interne de la jupe du deuxième corps comprend un premier godron et la surface externe du col du premier corps comprend un deuxième godron coopérant avec le premier godron de sorte à empêcher un éloignement du premier corps par rapport au deuxième corps selon l'axe.

Selon un mode de réalisation, la surface interne de la jupe du deuxième corps comprend au moins une première butée radiale et la surface externe du col du premier corps comprend au moins une deuxième butée coopérant avec la première butée radiale de sorte à bloquer la rotation du premier corps par rapport au deuxième corps au moins dans un sens autour de l'axe lorsque le premier corps est dans une position angulaire relative prédéterminée par rapport au deuxième corps autour de l'axe.

Selon un mode de réalisation, la cavité est sensiblement cylindrique à symétrie de rotation autour de l'axe.

Selon un mode de réalisation, les corps annulaires présentent une forme et des dimensions identiques.

Selon un mode de réalisation, les corps annulaires sont translucides.

Selon un mode de réalisation, une majorité de corps annulaires présentant une même couleur et au moins un corps annulaire de repère, c'est-à-dire un ou plusieurs corps annulaires présentant une deuxième couleur.

Selon un mode de réalisation, les N corps sont configurés de sorte qu'une surface externe du récipient délimitant radialement le récipient est sensiblement cylindrique.

Selon un autre aspect, on propose un récipient formé par assemblage par coopération de forme des C corps empilés, empilés selon l'axe x, les C corps empilés étant pris parmi les N corps de l'ensemble de dosage.

Selon un mode de réalisation, les corps annulaires sont configurés de sorte à délimiter chacun un volume libre de même volume de la cavité et la base est configurée de sorte à délimiter seulement transversalement la cavité ou la base est configurée pour délimiter un autre volume libre de la cavité chacun des volumes libres et l'autre volume libre présentant les mêmes formes et dimensions.

Selon un mode de réalisation, le même volume est compris entre 10 ml et 40 ml.

Selon, un mode de réalisation, le nombre N de corps est compris entre 15 et 20.

Selon un autre aspect, un procédé de dosage de nourriture comporte les étapes suivantes :

- Empiler C1 corps de l'ensemble de dosage, les C1 corps étant dépourvus de couvercle de sorte à former un premier empilement formant un premier récipient délimitant une première cavité ouverte, C1 étant un entier naturel supérieur à 1 et inférieur ou égal à N,
- Peser une masse prédéterminée de nourriture,
- Verser la masse prédéterminée de la nourriture dans le premier récipient,
- Retirer, du premier l'empilement, chaque corps annulaire non rempli de nourriture de sorte à obtenir un deuxième récipient délimitant une deuxième cavité comprenant C2 corps où C2 est un entier naturel inférieur ou égal à C1,
- Eventuellement, empiler un couvercle sur le deuxième empilement de sorte à obtenir le récipient délimitant une cavité fermée.

L'invention se rapporte également à un procédé de formation d'un récipient doseur pour doser et distribuer une dose prédéterminée de nourriture d'un type prédéterminé, le procédé comprenant :

- Empiler C2 corps de l'ensemble de dosage selon l'invention, les C2 corps comprenant la base dont le fond forme un fond de la cavité et au moins un des corps annulaires de sorte à former le récipient doseur délimitant une cavité ouverte configurée pour recevoir sensiblement la dose prédéterminée de nourriture dudit type lorsqu'elle est remplie à ras bord de nourriture dudit type.

Selon un mode de réalisation, le procédé comprend :

- Empiler C1 corps de l'ensemble de dosage selon l'invention, les C1 corps comprenant la base dont le fond forme un fond d'une cavité initiale et au moins un des corps annulaires de sorte à former un récipient initial délimitant la cavité initiale ouverte,
- Peser une masse prédéterminée de nourriture dudit type,
- Verser la masse prédéterminée de nourriture dudit type dans le premier récipient,
- Retirer, du premier l'empilement, chaque corps annulaire non rempli de la nourriture de sorte à obtenir le récipient délimitant la cavité comprenant C2 corps où C2 est inférieur ou égal à C1.

Selon un mode de réalisation, lorsque le niveau de croquettes dans le premier récipient est plus bas que le milieu, selon l'axe x, du volume interne délimité par le col du corps annulaire rempli au moins partiellement de nourriture le plus éloigné de la base selon l'axe x.

Selon un mode de réalisation, le volume libre délimité et entouré par chacun des corps annulaires présente un volume identique, le procédé comprenant :

▪ Déterminer le nombre C2 et éventuellement le nombre de remplissage du verre doseur à effectuer pour servir la dose de nourriture dudit type, à partir d'une masse élémentaire de nourriture dudit type susceptible d'être contenue dans chacun des corps annulaires et de la dose.

Selon un mode de réalisation, le procédé comprend :

▪ déterminer une masse élémentaire de nourriture dudit type susceptible d'être contenue dans chacun des corps annulaires comprenant :

▪ Empiler C3 corps de l'ensemble de dosage selon l'invention, les C3 corps comprenant la base dont le fond forme un fond d'une cavité de départ et au moins un des corps annulaires de sorte à former un récipient de départ délimitant la cavité de départ,
▪ Remplir à ras bord le récipient de départ de nourriture dudit type,
▪ Peser la nourriture contenue dans le récipient de départ de sorte à obtenir la masse de nourriture dudit type contenue dans le récipient de départ,
▪ Déterminer la masse élémentaire de nourriture dudit type contenue dans un anneau du premier récipient à partir de ladite masse et de C3 ou C3-1.

Selon un mode de réalisation, le procédé comprend :

▪ déterminer la quantité élémentaire de nourriture susceptible d'être contenue dans chacun des corps annulaires comprenant :

▪ diviser la masse prédéterminée de nourriture par C2 ou par C2 - 1.

L'invention se rapporte à un procédé pour délivrer la dose prédéterminée de nourriture dudit type, comprenant le procédé de formation du récipient doseur selon l'invention et comprenant en outre mise en œuvre de J fois la suite d'étapes suivantes :

▪ Remplir à ras bord le récipient doseur de nourriture dudit type,

▪ Servir la nourriture contenue dans le récipient doseur.

L'invention se rapporte également à un procédé pour délivrer quotidiennement de la nourriture à un animal lors d'une phase de régime débutant un premier jour lors duquel on doit servir la dose prédéterminée de nourriture dudit type à l'animal, le procédé comprenant, chaque jour d'une première période de X jours ou X mois, le procédé pour délivrer la dose prédéterminée de nourriture dudit type,
le procédé comprenant en outre pour chacune de P périodes consécutives de X jours ou X mois suivant la première période :

▪ le premier jour la période :

o Ajouter un anneau au verre doseur en cas de régime de prise de masse de sorte à obtenir un nouveau verre doseur ou retirer un anneau au verre doseur en cas de régime amaigrissant de sorte à obtenir un récipient doseur de la période,

▪ chaque jour de la période lors duquel une condition prédéterminée d'arrêt n'est pas respectée :

o La mise en œuvre de J fois de la suite d'étapes suivantes : :

▪ Remplir à ras bord le récipient doseur de la période de nourriture dudit type,
▪ Servir la nourriture contenue dans le récipient doseur de la période.

L'invention se rapporte également à un procédé pour délivrer quotidiennement de la nourriture à un animal lors d'une phase de régime débutant un premier jour lors duquel on doit servir la dose prédéterminée de nourriture dudit type à l'animal, le procédé comprenant en outre pour chacune de P périodes consécutives de X jours ou X mois suivant la première période,

- le premier jour la période :

o déterminer un nouveau nombre d'anneaux à utiliser pour former un nouveau récipient avec la base à partir d'une dose quotidienne prédéterminée à distribuer pendant ladite période et d'une masse élémentaire de nourriture dudit type susceptible d'être contenue dans chacun des corps annulaires,
o Ajouter ou retirer un nombre d'anneaux correspondant à une différence entre le nouveau nombre d'anneaux et le nombre d'anneaux du récipient doseur de la période précédente, de sorte à obtenir un nouveau récipient,

- chaque jour de la période lors duquel une condition prédéterminée d'arrêt n'est pas respectée :

o La mise en œuvre de J fois de la suite d'étapes suivantes :

■ Remplir à ras bord le récipient doseur de la période de nourriture dudit type,
■ Servir la nourriture contenue dans le récipient doseur de la période.

La solution proposée permet de créer un récipient dont la contenance correspond à la dose souhaitée ce qui permet un dosage rapide sans risque de dépasser la dose prédéfinie.

Elle permet de doser aisément, de façon fiable, rapide, précise et répétable une quantité de nourriture prédéterminée, par exemple de croquettes.

La délivrance journalière d'une dose prédéterminée de croquettes à un animal est simple et rapide.

Cela favorise le respect, sur le long terme, du rationnement par les propriétaires d'animaux.

Elle est compacte, aisément lavable et peu coûteuse et réutilisable.

Elle permet en outre de doser et de stocker la nourriture pour plusieurs repas, par exemple d'une même journée, tout en assurant une bonne conservation de cette dernière.

La solution proposée peut suivre un animal en s'adaptant à chaque étape de sa vie : croissance, âge adulte, gestation, sénescence, à chaque type d'aliment et à ses éventuelles pathologies.

Les ajustements de dose se font facilement retirant ou ajoutant simplement un étage ou nom d'étage déterminé en fonction de la quantité de nourriture susceptible d'être contenu dans un corps annulaire et non plus en pesant, à chaque ajustement, la quantité de nourriture à délivrer. Cela simplifie grandement le travail des propriétaires d'animaux et favorise donc l'observance.

L'erreur de dosage de la quantité de nourriture dosée et distribuée par le récipient est inférieure à la quantité délimitée par un anneau.

Cette solution permet d'éviter la recherche d'un verre doseur spécifique à l'aliment à distribuer, par exemple à une marque de croquettes particulière.

**Brève description des figures**

- La Figure 1 représente schématiquement en perspective représente un ensemble de corps, selon un premier mode de réalisation, empilés selon un axe de sorte à former un récipient,
- La Figure 2 représente schématiquement en coupe selon un plan P le récipient de la figure 1,
- La Figure 3 représente schématiquement plus précisément deux corps annulaires empilés consécutivement selon l'axe,
- La Figure 4 représente schématiquement en perspective un corps annulaire de l'ensemble de la [Fig.1] ;
- La Figure 5 représente schématiquement en coupe un récipient selon un autre mode de réalisation.

**Description détaillée**

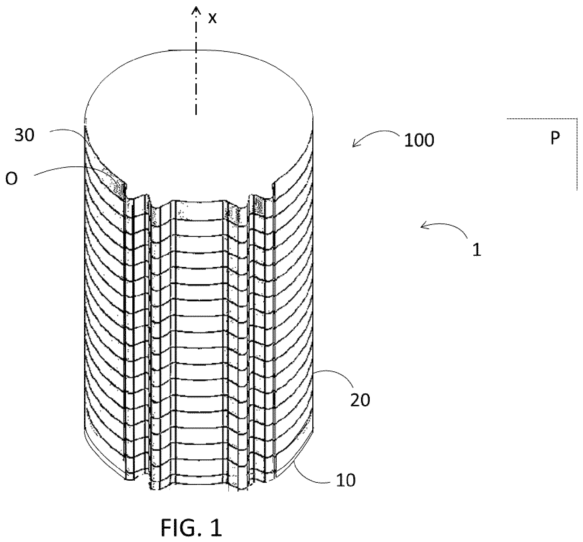

La solution proposée se rapporte à un ensemble 1 de dosage de nourriture comprenant N corps permettant de former un récipient 100 destiné à recevoir de la nourriture dont un exemple est représenté en figure 1. N est un entier naturel supérieur à 1.

Autrement dit, de la nourriture est destinée à être stockée dans le récipient et plus particulièrement dans une cavité 100 délimitée par le récipient 50.

Un des N corps est une base 10 présentant un fond 11a et plusieurs corps pris parmi les N corps sont des corps annulaires ou anneaux 20.

Dans l'exemple non limitatif de la figure 1, N = 18.

Les N corps sont assemblables de façon séparable par coopération de forme entre lesdits N corps 10, 20, 30 en étant empilés selon un axe x de sorte à permettre de former un récipient de dosage 100, le récipient de dosage 100 délimitant une cavité 50 destinée à recevoir de la nourriture, par assemblage de façon séparable par coopération de forme de C corps empilés pris parmi les N corps, les C corps empilés étant empilés selon l'axe x, où C est l'un quelconque du ou des nombres entiers compris entre 2 et N.

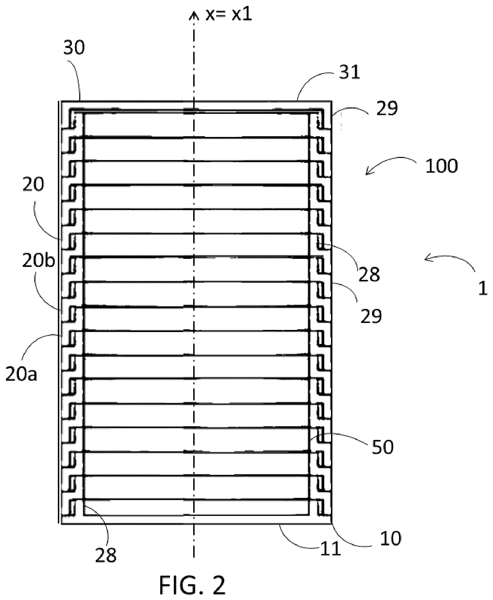

Dans l'exemple non limitatif des figures 1 et 2, C = N.

Les C corps empilés comprennent la base 10 dont un fond 11 délimite la cavité 50 transversalement à l'axe x et au moins un des corps annulaires 20, ledit au moins un corps annulaire 20 entourant l'axe x.

Dans l'exemple non limitatif des figures 1 et 2, les C corps comprennent 16 corps annulaires 20.

Chaque corps annulaire 20 délimite radialement la cavité 50.

La solution proposée se rapporte également au récipient de dosage de nourriture 100 délimitant la cavité 50 destinée à recevoir de la nourriture, le récipient 100 étant formé par assemblage de façon séparable par coopération de forme de C corps 10, 20, 30 empilés selon l'axe x pris parmi les N corps de l'ensemble 1, où C est l'un quelconque des nombres entiers compris entre 2 et N.

Cet ensemble de dosage permet de former de façon simple par coopération de forme, sans nécessiter d'éléments supplémentaires, un récipient de dosage 100 par empilement et assemblage de C corps pris parmi les N corps.

Selon un mode de réalisation, les C corps sont assemblés uniquement par coopération de forme entre les corps.

La taille du récipient de dosage 100 et plus particulièrement sa hauteur, est réglable en fonction de la dose de nourriture que l'on souhaite doser. Ce réglage se réalise par la sélection du nombre de corps à empiler pour former le récipient de la taille souhaitée. Ce réglage est donc aisé et permet de réaliser un dosage précis, fiable et reproductible.

Par ailleurs, le récipient est démontable en séparant les corps empilés qui le forment ce qui permet de le transporter et de le stocker aisément.

Selon un exemple, comme représenté sur la figure 1 et 2, les N corps 10, 20, 30 comprennent un couvercle 30 comprenant un capot 31 destiné à délimiter la cavité 50 transversalement à l'axe x corps empilés de sorte que la cavité 50 est fermée.

C est alors un entier naturel compris entre 3 et N.

Le couvercle 30 permet de former un récipient 100 délimitant une cavité fermée 50. Il protège ainsi de l'air et donc de l'oxydation notamment des acides gras essentiels, la nourriture contenue dans le récipient. Cela permet de limiter la perte d'arôme et donc la perte d'appétence. Par ailleurs, cela assure une protection des croquettes contre l'humidité ce qui limite leur altération. La solution proposée permet enfin de protéger la nourriture des animaux, par exemple, des insectes. Il est donc possible de conserver, dans le récipient plusieurs doses de nourriture, par exemple pour une même journée, tout en assurant une bonne conservation de la nourriture. Le couvercle 30 permet également un transport aisé de la nourriture.

La cavité 50 s'étend continûment, selon l'axe x, depuis le premier corps de l'empilement, c'est-à-dire depuis la base 10, jusqu'au Ciem corps de l'empilement dans le sens de l'empilement selon l'axe x.

Le récipient 100 est constitué d'un empilement, dans l'ordre selon l'axe x, de la base 10 puis d'au moins un corps annulaire 20 puis de l'éventuel couvercle 30 de l'ensemble 1 de corps 10, 20, 30.

La cavité 50 s'étend continûment selon l'axe x depuis la base 10 jusqu'à l'éventuel couvercle 30 ou jusqu'au corps annulaire le plus éloigné de la base 20 selon l'axe x, c'est-à-dire jusqu'au dernier corps annulaire C empilé selon l'axe x.

Sur la figure 2, on a désigné deux corps pris parmi les N corps 20. Ces deux corps comprennent un premier corps 20a et un deuxième corps 20b de l'ensemble de C corps empilés formant le récipient 50.

Ces deux corps 20a et 20b sont deux corps empilés de façon consécutive dans l'empilement formé par les C corps empilés.

Autrement dit, le premier corps 20a et le deuxième corps 20b sont assemblés par coopération de forme entre le premier corps 20a et le deuxième corps 20b.

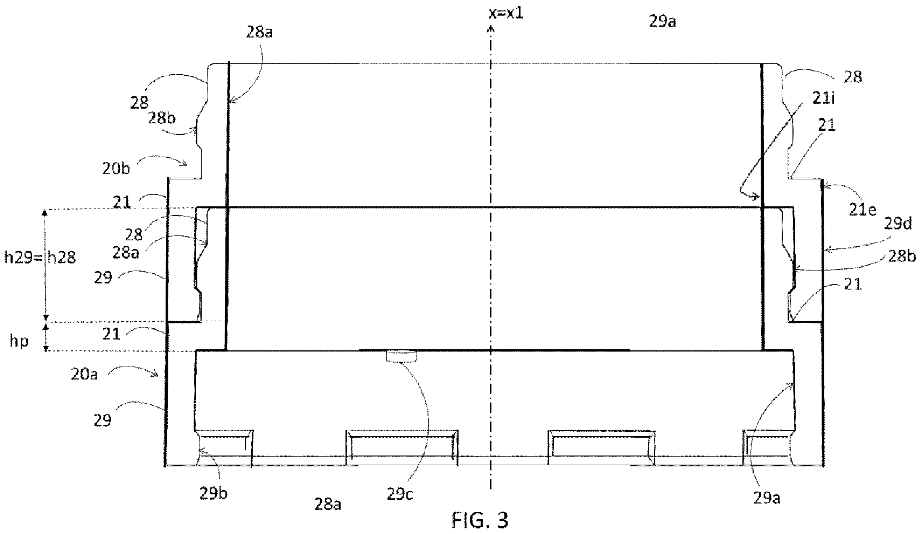

Selon un mode de réalisation, comme visible sur les figures 2 et 3, chacun des N corps 10, 20, 30, tout comme le premier corps 20a et le deuxième corps 20b, comprend une jupe 29 comprenant une surface interne 29a globalement cylindrique entourant un axe du corps x1 et/ou un col 28 comprenant une surface externe 28a sensiblement cylindrique entourant l'axe du corps x1 de sorte que pour chaque couple d'un premier corps 20a et d'un deuxième corps 20b pris parmi les C corps empilés du récipient du récipient 100 et étant assemblés de façon démontable par coopération de forme entre le premier corps 20a et le deuxième corps 20b, le col 28 du premier corps 20a est reçu dans le volume délimité et entouré radialement par la surface interne 29a de la jupe 29 du deuxième corps 20b et le premier corps 20a et le deuxième corps 20b sont assemblés par coopération de forme entre le col 28 du premier corps 20a et la jupe 29 du deuxième corps 20b. Cette configuration permet un assemblage aisé des corps 10, 20, 30 pour former le récipient 100.

Cet assemblage est permis ou réalisé au moins en partie, pour chaque couple de corps 20a, 20b de l'empilement formant le récipient 100, en insérant le col 28 du premier corps 20a dans volume délimité et entouré radialement par la jupe 29 du deuxième corps 29 comme nous le décrirons dans la suite du texte.

Cette configuration limite en outre le risque d'éventement de la nourriture stockée dans le récipient et d'échappement de la nourriture du récipient.

L'axe x1 de chacun des corps 10, 20, 30 empilés et assemblés de sorte à former le récipient 100 est sensiblement confondu avec l'axe x.

Dans l'exemple des figures 1 à 4, chaque col 28 est annulaire.

Il délimite et entoure radialement un volume cylindrique VC dont l'axe du cylindre est l'axe x1 du corps.

Par surface interne 28a du col 28, on entend la surface du col 28 qui entoure radialement un volume cylindrique VC libre destiné à faire partie de la cavité 50 ou faisant partie de la cavité dans l'empilement.

Selon un mode de réalisation, les volumes cylindriques VC délimités et entourés par les surfaces internes 28a des cols 28 respectifs ont la même forme et les mêmes dimensions perpendiculairement à l'axe x1 de chaque corps.

Ainsi, ces volumes cylindriques présentent tous un même volume (en $m^3$).

Chaque corps 10, 20, 30 comprend une partie principale 11, 21, 31, présentant une hauteur hp prédéterminée prise le long de l'axe x1 du corps 10, 20, 30, sur laquelle, lorsque le corps présente un col 28, le col 28 est en saillie axiale (c'est-à-dire selon l'axe x1 du corps) dans un premier sens et, lorsque le corps présente une jupe, sur laquelle une partie annulaire de la jupe 29 est en saillie axiale (c'est-à-dire selon l'axe x1 du corps) dans un deuxième sens.

Par hauteur prédéterminée hp, on entend que la partie principale 11, 21, 31 présente une même hauteur sur toute la circonférence de la partie annulaire.

Lorsque le corps présente une jupe 29 et un col 28, le premier sens est opposé au deuxième sens.

Chaque corps annulaire 20 comprend un col 28 et une jupe 29.

Plus précisément, chaque partie prise parmi la partie principale 21, le col 28 et la jupe 29 de chaque corps annulaire 20 est annulaire.

Par conséquent, chaque corps annulaire 20 comprend une partie principale annulaire 21 s'étendant radialement depuis le col 28 jusqu'à la jupe 29 et sur laquelle le col 28 est en saillie axiale (c'est-à-dire selon l'axe x1 du corps annulaire 20) dans le premier sens, et sur laquelle la jupe 29 est en saillie axiale dans le deuxième sens opposé au premier sens.

Dans l'exemple des figures 1 à 4, comme visible en figure 2, la base 10 comprend une partie principale 11 comprenant le fond 11a, et un col 28. Le col 28 étant en saillie sur la partie principale 11 selon l'axe x1 de la base 10.

Dans l'exemple des figures, le couvercle 30 comprend une partie principale 31 contiguë au col 28 de la dernière pièce annulaire 20 de l'empilement 100 le long de l'axe x de sorte que la partie principale 31 ferme la cavité 50 et que la cavité 50 est globalement cylindrique.

Le couvercle 30 comprend également une jupe 29 en saillie sur la partie principale 31 selon l'axe x1 de la base 31 du couvercle 30.

Selon un mode de réalisation, la partie principale annulaire 21 de chaque corps annulaire 20 prolonge axialement, selon l'axe x1 du corps correspondant, la surface interne 28a du col 28 de sorte qu'une surface formée par la surface interne 21i de la partie principale annulaire 21 et par la surface interne 28a délimitée par le col 28 est sensiblement cylindrique.

Par surface interne 21i de la partie principale annulaire 21, on entend la surface de la partie principale annulaire 21 qui entoure radialement un volume libre destiné à faire partie de la cavité 50.

Selon un mode de réalisation, les corps présentent les caractéristiques suivantes :

- la hauteur de col h28, prise selon l'axe x1, du col 28 de chacun des corps annulaires 20 ou de chacun des N corps 10, 20, 30 est sensiblement la même,
- la hauteur de jupe h29, prise selon l'axe x1, de la jupe 29 de chacun des corps annulaires 20 ou de chacun des N corps 10, 20, 30 est inférieure ou égale à la hauteur de col h28,
- les volumes cylindriques VC délimités et entourés par les parties cylindriques des cols 28 respectifs ont la même forme et les mêmes dimensions.

Ainsi, les corps annulaires 20 sont configurés de sorte que pour chaque couple d'un premier corps annulaire 20a et d'un deuxième corps annulaire 20b assemblés de façon empilée selon l'axe x par coopération de forme entre le col 28 du premier corps annulaire 20a et de la jupe 29 du deuxième corps annulaire 20b, la partie principale annulaire 21 et le col 28 du deuxième corps annulaire 20b prolongent le col annulaire 28 du premier corps annulaire 20a selon l'axe x de sorte que ces deux cols et les parties principales annulaires 21 des deux corps annulaires 20a, 20b définissent une surface sensiblement cylindrique délimitant et entourant radialement une portion cylindrique de la cavité 50 s'étendant continûment, selon l'axe x, le long des cols 28 et des parties principales 21 de chacun des premier et deuxième corps annulaires 20a, 20b.

Autrement dit, les deux corps 20a, 20b sont accolés l'un à l'autre.

Plus précisément, la partie principale 28 du deuxième corps 20b est accolée au col 28 du premier corps 20a.

Cette configuration permet de former une cavité cylindrique au moins le long des corps annulaires et ainsi limiter les risques de pénétration de nourriture entre les cols des corps empilés pouvant rendre la séparation des pièces difficiles et pouvant être défavorable à un dosage précis de la nourriture. Le nettoyage du récipient est également aisé et ne nécessite pas son démontage.

Dans l'exemple non limitatif des figures, la hauteur principale hp, prise selon l'axe x1, de la partie principale 21 de chacun des corps annulaires 20 est sensiblement la même.

Cela permet d'assembler de façon aisée un nombre quelconque de corps annulaires 20 et un dosage aisé et un réglage aisé de la hauteur du récipient.

En variante, les parties principales 21 de différents corps annulaires présentent des hauteurs prédéterminées respectives distinctes.

Selon un mode de réalisation, chaque col 28 définit une surface interne 28a sensiblement cylindrique à symétrie de révolution autour de l'axe du corps x1.

Selon un mode de réalisation, la partie principale annulaire 21 et le col 28 de chaque corps annulaire 20 délimitent et entourent radialement un premier volume interne VI continu sensiblement cylindrique à symétrie de révolution autour de l'axe x1.

En variante, la surface interne 28a est cylindrique sans être à symétrie de révolution. Elle est par exemple à section elliptique ou rectangulaire. Différentes formes sont envisageables.

Par surface externe 29d de la jupe 29, on entend la surface de la jupe 29 délimitant radialement la jupe 29 et entourant radialement la surface interne 29a de la jupe.

Par surface externe 11e, 21e, 31e de la partie principale 11, 21, 31, on entend on entend la surface de la partie principale délimitant radialement la partie principale 11, 21, 31 et entourant radialement l'éventuelle surface interne 21i de la partie principale 21.

Selon un mode de réalisation, la partie principale annulaire 21 de chaque corps ayant une jupe, prolonge axialement la surface externe 29d délimitant radialement la jupe 29 et entourant radialement la surface interne 29a délimitée par la jupe 29, de sorte qu'une surface formée par la surface externe 21e de la partie principale 21 du corps et par la surface externe 29d délimitant radialement la jupe 29 du corps est sensiblement cylindrique.

Selon un mode de réalisation, la hauteur de jupe h29, prise selon l'axe x1, de la jupe 29 de chacun des corps ayant une jupe 29 est la même et est sensiblement égale à la hauteur de col 28 de sorte que la surface externe formée par les surfaces externes 29d des jupes 29 de chaque couple de deux corps empilés consécutivement et par les surfaces externes 21e des parties principales de ces deux corps consécutifs sont sensiblement cylindriques.

Ainsi, la partie principale 21 du premier corps 20a est accolée à la jupe 29 de la deuxième pièce 20b.

Ces surfaces cylindriques peuvent être à symétrie de révolution ou être une surface cylindrique dont la section présente une forme différente.

Ainsi, la surface externe formée par les jupes et parties principales des corps du récipient est cylindrique.

Cette configuration permet de monter un récipient sous forme d'un gobelet (refermable avec un éventuel couvercle) présentant une surface radiale externe sensiblement cylindrique tout le long des corps annulaires 20. Cela permet de favoriser le lavage du gobelet.

Dans l'exemple non limitatif des figures 1 à 4, la partie principale 31 du couvercle 30 est une plaque s'étendant sensiblement perpendiculairement à l'axe x1 du couvercle 30 et la partie principale 11 de la base 10 une plaque s'étendant sensiblement perpendiculairement à l'axe x1 de la base 10.

Dans l'exemple des figures 1 à 4, chacune de ces plaques présente une forme de disque muni d'oreilles O réparties radialement autour de l'axe x1.

Autrement dit, chacune des oreilles O forme une excroissance radiale sur le disque.

Ainsi la forme cylindrique de la surface externe du récipient 100 n'est pas à symétrie de révolution.

Dans un autre exemple les plaques 11, 31 sont des disques. C'est par exemple le cas lorsque la surface externe du récipient est cylindrique.

D'autres formes sont bien entendu envisageables.

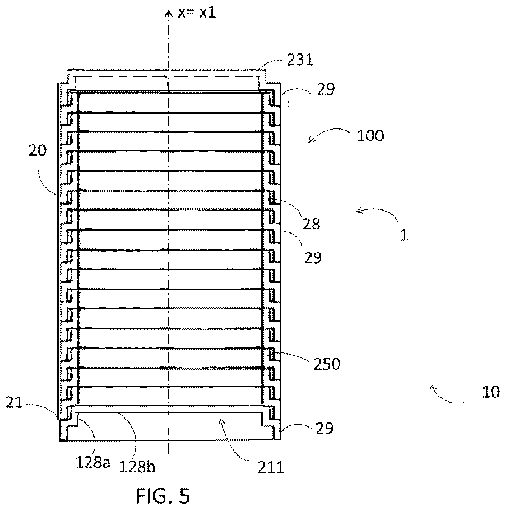

Le récipient 200 de la figure 5 diffère de celui des figures 1 à 4 uniquement par la base 211 et par le couvercle 231.

Dans le mode de réalisation de la figure 5, le couvercle 231 présente une partie principale annulaire 21, un col 128 et une jupe 29.

Le col 128 diffère des cols 29 de la figure 1 en ce qu'il comprend une partie annulaire 128a prolongée axialement en s'éloignant de la partie principale annulaire 21 par une plaque 128b destinée à fermer transversalement la cavité 250 délimitée par le récipient 200 et destinée à recevoir la nourriture.

Dans l'exemple de la figure 5, la base 211 est identique au couvercle 231 ou présente une forme et des dimensions identiques.

En variante, la hauteur de col du couvercle est différente des hauteurs des cols des autres pièces. La base 211 diffère alors du corps uniquement par la hauteur du col.

Ainsi ce récipient délimite une cavité sensiblement cylindrique. En revanche, contrairement au mode de réalisation des figures 1 à 4, la surface externe du récipient délimitant radialement et axialement le récipient n'est pas totalement cylindrique.

Dans cet exemple, seuls les cols 28 des corps annulaires et l'éventuel couvercle délimitent une portion cylindrique de la cavité.

Le col de la base 211 ne délimite pas une portion cylindrique de la cavité.

Autrement dit la base 211 ne délimite pas radialement la cavité. La base délimite la cavité uniquement transversalement, c'est-à-dire dans un plan perpendiculaire à l'axe x d'empilement.

A l'inverse, dans l'exemple de la figure 2, la base délimite une un volume libre de la cavité.

Plus précisément, le col de la base 211 délimite un volume libre de la cavité.

Ce volume libre présente avantageusement un volume (en $m^3$) identique au volume du volume libre délimité par chacun des corps annulaires. Autrement dit, de façon générale, la base 28 peut délimiter radialement la cavité.

Avantageusement, les volumes libres, qui peuvent être les volumes cylindriques précités, présentent les mêmes formes et dimensions.

En variante, on peut prévoir un ensemble comprenant le couvercle de l'exemple des figures 1 à 4 et la base de l'exemple de la figure 5 ou la base de l'exemple des figures 1 à 4 et le couvercle de l'exemple de la figure 5.

Selon un exemple, l'ensemble corps annulaires 20 comprend au moins deux corps annulaires présentant chacun une partie principale présentant une longueur prise l'axe x1, les dimensions des parties centrales des deux corps annulaires différant uniquement par leur longueur.

Autrement dit, l'ensemble de corps annulaires 20 comprend au moins deux corps annulaires différant par des dimensions des parties principales des deux corps annulaires qui seront définies ultérieurement.

**Coopération de forme**

Nous allons à présent décrire plus précisément la coopération de forme entre les corps.

Comme indiqué précédemment, pour chaque couple d'un premier corps 20a et d'un deuxième corps 20b pris parmi les C corps empilés du récipient du récipient 100 et étant assemblés de façon démontable par coopération de forme entre le premier corps 20a et le deuxième corps 20b, le premier corps 20a et le deuxième corps 20b sont assemblés par coopération de forme entre le col 28 du premier corps 20a et la jupe 29 du deuxième corps 20b.

Selon un exemple, chaque couple d'un premier corps 20a et d'un deuxième corps 20b est assemblé par coopération de forme entre la surface radiale externe 28a du col 28 du premier corps 20a et la surface radiale interne 29a de la jupe 29 du deuxième corps 20b.

Dans le mode de réalisation des figures 1 à 4, comme visible en figure 3, la surface interne 29a de la jupe 29 du deuxième corps 20b comprend un premier godron 29b et la surface externe 28a du col 28 du premier corps 20a comprend un deuxième godron 28b coopérant avec le premier godron 29b de sorte à empêcher un éloignement du premier corps 29a par rapport au deuxième corps 29b selon l'axe x.

Selon un exemple, la surface interne 29a de la jupe 29 du deuxième corps 20b comprend un ensemble de premiers godrons 29b répartis angulairement autour de l'axe x et la surface externe 28a du col 28 du premier corps 20a comprend un ensemble de deuxièmes godrons 28b répartis angulairement avec l'axe x de sorte que lorsque le premier corps et le deuxième corps sont empilés le long de l'axe x, ces deux corps 20a, 20b sont aptes à être dans une première position angulaire relative dans laquelle les premiers godrons sont distants angulairement des deuxièmes godrons de sorte que les deux corps 20a, 20b sont libres de s'éloigner l'un de l'autre selon l'axe x et une deuxième position angulaire relative dans laquelle les premiers godrons coopèrent avec les deuxièmes godrons de sorte à empêcher un éloignement du premier corps 20a par rapport au deuxième corps 20b selon l'axe x.

Selon un exemple, la deuxième position angulaire relative est la position angulaire relative prédéterminée précédemment citée.

Autrement dit, dans deuxième position angulaire relative, chaque premier godron est en regard d'un deuxième godron de sorte que le deuxième godron forme une butée axiale empêchant un éloignement du premier corps 20a par rapport au deuxième corps 20b selon l'axe x.

Ainsi, les deux corps 20a, 20b sont assemblés par une rotation de l'un par rapport à l'autre autour de l'axe x d'empilement. Ce type d'assemblage est relativement aisé.

Selon un mode de réalisation, la surface interne 29a de la jupe 29 du deuxième corps 20b et la surface externe 28a du col 28 du premier corps 20a sont pour bloquer la rotation du premier corps 20a par rapport au deuxième corps 20b dans au moins un sens autour de l'axe x d'empilement dans la deuxième position angulaire relative.

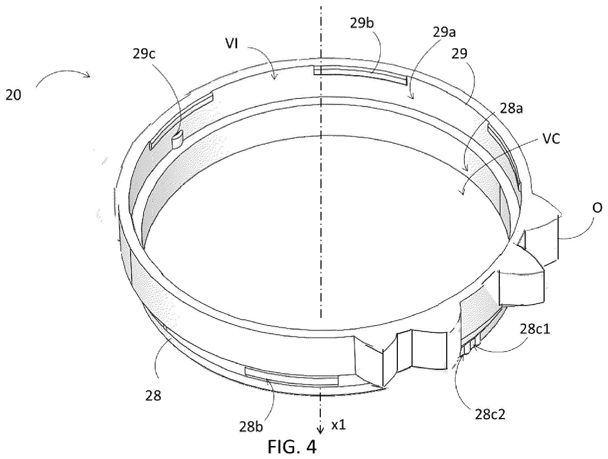

Selon un exemple, comme visible en figures 3 et 4, la surface interne 29a de la jupe 29 du deuxième corps 20b comprend au moins une première butée radiale 29c et la surface externe 28a du col 28 du premier corps 20a comprend au moins une deuxième butée radiale 28c1, 28c2 configurées et agencées pour coopérer avec la au moins une première butée 29c de sorte à bloquer la rotation du premier corps 20a par rapport au deuxième corps 20b dans au moins un sens autour de l'axe x d'empilement dans la deuxième position angulaire relative.

Dans l'exemple non limitatif des figures 3 et 4, la surface interne 29a de la jupe 29 du deuxième corps 20b comprend une première butée radiale 29c et la surface externe 28a du col 28 du premier corps 20a comprend deux deuxièmes butées radiales 28c1, 28c2 configurées et agencées pour coopérer avec la au moins une première butée 29c de sorte à bloquer la rotation du premier corps 20a par rapport au deuxième corps 20b dans au moins un sens autour de l'axe x d'empilement dans la deuxième position angulaire relative.

Plus précisément, les butées sont configurées et agencées de sorte que la première butée 29c est située radialement entre les deux deuxièmes butées 28c1, 28c2 dans la deuxième position angulaire relative.

Selon un exemple, la première butée 29c est en butée radiale radialement entre les deux deuxièmes butées 28c1, 28c2 dans la deuxième position angulaire relative.

En variante, le blocage en rotation est réalisé à un jeu radial de fonctionnement près entre la première butée 29c et chacune des deux deuxièmes butées.

En variante, la surface interne de la jupe du deuxième corps comprend un premier filetage et la surface externe du col du premier corps comprend un deuxième filetage coopérant avec le premier filetage.

Ainsi, les deux corps sont assemblés par une rotation de l'un par rapport à l'autre autour de l'axe x d'empilement et plus précisément par vissage. Ce type d'assemblage est relativement aisé.

En variante, les surfaces de la jupe du deuxième corps et la surface externe du col du premier corps sont configurées, notamment dimensionnées, de sorte que ces corps puissent être assemblés par emmanchement à force du col 28 du premier corps 20a dans la jupe 29 du deuxième corps 20b.

A cet effet, la surface interne de la jupe du deuxième corps et la surface externe du col du premier corps sont sensiblement complémentaires.

En variante, la jupe du deuxième corps et le col du premier corps sont configurés de sorte que ces corps puissent être assemblés par emboîtage élastique du col 28 du premier corps 20a dans la jupe 29 du deuxième corps 20b.

La solution proposée se rapporte également à un procédé de dosage de nourriture caractérisé en ce qu'il comporte les étapes suivantes :

- Empiler C1 corps de l'ensemble de dosage 1 précédemment décrit, les C1 corps étant dépourvus de couvercle de sorte à former un premier empilement formant un premier récipient délimitant une première cavité est ouverte,
- Peser une masse prédéterminée de nourriture,
- Verser la masse prédéterminée de la nourriture dans le premier récipient,

- Retirer du premier l'empilement, chaque corps annulaire non rempli de nourriture de sorte à obtenir un deuxième récipient délimitant une deuxième cavité comprenant C2 corps où C2 est inférieur ou égal à C1,
- Eventuellement, empiler le couvercle 30 sur le deuxième empilement de sorte à obtenir le récipient 100 délimitant la cavité 50 fermée.

Lorsque le procédé ne comprend pas d'étape d'empilement de couvercle 30, le deuxième récipient est le récipient et la deuxième cavité est la cavité.

Lorsque les besoins alimentaires de l'animal évoluent ou qu'ils doivent être adaptés pour préserver sa santé, des anneaux peuvent être ajoutés (croissance, augmentation activité physique, gestation ...) ou retirés (surpoids, diète ...) et ainsi permettre une modulation pragmatique et fiable des doses. C1 et C2 sont des entiers naturels.

Les C1 corps comprennent la base 10 et au moins un corps annulaire 20.

Selon un exemple, C1 est égal à N -1.

En variante, C1 est supérieur à 1 et inférieur à N-1 lorsque l'ensemble de corps 1 comprend un couvercle.

En variante, C1 est égal à N ou C1 est supérieur à 1 et inférieur à N lorsque l'ensemble de corps est dépourvu de couvercle.

Ce procédé de dosage permet de s'assurer simplement que l'erreur de dosage d'une nourriture prédéterminée est inférieure ou égale à la masse de cette nourriture susceptible d'être contenue dans le volume délimité par le col d'un corps annulaire.

Selon un exemple, le diamètre du volume délimité par les cols 28 des N corps est compris entre 4 cm et 12 cm.

Par exemple, ce diamètre est égal à 5 cm, 6, cm, à 7 cm, à 8cm, à 9cm, ou à 10 cm.

Selon un exemple, la hauteur de col h28 du est comprise entre 4 mm et 30 mm, par exemple entre 4 mm et 12 mm.

Par exemple, cette hauteur est égale à 4mm, 5 mm, 6 mm, 7mm, 9 mm, 9mm ou 10 mm.

Selon un exemple le nombre N de corps de l'ensemble est compris entre 5 et 20, par exemple entre 10 et 20, entre 10 et 15 ou entre 15 et 17. Il est par exemple égal à 13, 14, 15, 16 ou 17, 18, 19 ou 20.

Par exemple, chaque corps annulaire est dimensionné de sorte que le col 28 du corps annulaire délimite un volume interne compris entre 10 ml et 50 ml.

Dans au moins un mode de réalisation, les corps sont configurés de sorte que le volume interne destiné à faire partie ou faisant partie de la cavité délimitée et entourée par chacun des cols est apte à stocker entre 5 g et 7 g de croquettes pour chiens ou chats. Ce mode de réalisation est particulièrement adapté au nourrissage et à la modulation de nourriture pour chats ou petits chiens dont la dose journalière de croquettes va jusqu'à 150g par jour.

Dans au moins un mode de réalisation, les corps sont configurés de sorte que le volume interne destiné à faire partie ou faisant partie de la cavité délimitée et entourée par chacun des cols est apte à stocker entre 15 g et 20 g de croquettes pour chiens ou chats. Ce mode de réalisation est particulièrement adapté au nourrissage et à la modulation de nourriture de chiens de taille moyenne ou grande dont la dose journalière de croquettes est comprise entre 150 g et 400 g par jour.

Afin de réaliser cette configuration, la masse de différentes marques croquettes susceptible d'être reçue dans le volume interne est mesurée.

Le volume délimité par le col d'un corps annulaire dans l'empilement est le volume de la partie de la cavité délimitée par le corps annulaire dans le récipient doseur.

Selon un exemple, chacun des corps 10, 20, 30 ou au moins les corps annulaires 20 est translucide ou transparent. En permettant de visualiser la nourriture contenue dans le récipient, cela permet de faciliter le dosage de la nourriture lorsque l'on souhaite identifier les corps annulaires remplis de nourriture.

Selon un exemple, une majorité de corps annulaires présentant une même couleur et au moins un corps annulaire de repère présentant une deuxième couleur.

Par exemple, une majorité de corps annulaires est incolore et au moins un corps annulaire de repère est coloré.

Dans un au moins un mode de réalisation, l'ensemble comprend un ou plusieurs corps annulaires de repère de la deuxième couleur

Il comprend par exemple un ou deux corps annulaires de repère de la deuxième couleur.

Dans un exemple il comprend quatre anneaux colorés.

Cela permet de monter un récipient stockant une dose de nourriture correspondant à plusieurs portions destinées à être servies à un animal en plusieurs fois et de séparer deux à deux les portions par un corps annulaire coloré.

Ainsi, l'utilisateur pourra s'assurer qu'il sert la bonne portion en versant une première portion de nourriture contenue dans le verre jusqu'à ce qu'il ne reste de la nourriture que jusqu'au corps annulaire présentant la deuxième couleur le plus éloigné de la base puis il pourra servir une deuxième portion de nourriture jusqu'à ce qu'il ne reste de la nourriture que jusqu'au corps annulaire présentant la deuxième couleur qui est le deuxième le plus éloigné et ainsi de suite jusqu'à la base. En fonction de l'animal et du plan d'alimentation, on peut donc remplir le récipient le matin pour une dose correspondant aux besoins de l'animal sur 24 heures pour une administration fractionnée.

Les anneaux de la deuxième couleur peuvent servir de repères pour les transitions alimentaires, les modulations (par exemple les diètes) et les distributions en plusieurs fois (chats et chiots).

Selon un exemple, les corps sont en matière plastique. Par exemple, ils sont en plastique recyclé.

L'invention se rapporte également à des procédés d'utilisation de l'ensemble de dosage.

L'invention se rapporte notamment à un procédé de formation d'un récipient doseur pour doser et distribuer une dose prédéterminée de nourriture d'un type prédéterminé.

Selon au moins un mode de réalisation, le procédé est un procédé de formation d'un récipient doseur pour doser distribuer une dose prédéterminée de croquettes d'une variété prédéterminée à un animal.

L'animal est un animal de compagnie, par exemple un chien ou un chat ou un lapin.

Par nourriture d'un type prédéterminé, on entend une nourriture dont une masse prédéterminée occupe un même volume d'un récipient formé par des corps de l'ensemble.

Il s'agit par exemple une variété donnée de croquettes ou de granulés pour animal de compagnie par exemple pour chien, chat ou lapin.

En variante, la nourriture est un pâté pour animal, par exemple pour animal de compagnie, par exemple pour chien, chat ou lapin.

La forme, les dimensions et la masse volumique des croquettes d'une même variété sont identiques sensiblement identiques de sorte qu'une masse prédéterminée de croquettes de ladite variété occupe un volume d'un récipient de dosage formé à partir de l'ensemble de dosage.

La dose prédéterminée est par exemple la dose journalière de nourriture dudit type de l'animal considérée.

La dose journalière est, par exemple, la masse journalière.

Le procédé de formation du récipient doseur comprend les étapes suivantes :

■ Empiler C2 corps de l'ensemble de dosage 1, les C2 corps comprenant la base dont le fond forme un fond de la cavité et au moins un des corps annulaires de sorte à former le récipient doseur délimitant une cavité ouverte.

Le nombre C2 est défini de façon que la cavité ouverte soit configurée pour recevoir la dose prédéterminée de nourriture dudit type lorsqu'elle est remplie à ras bord de nourriture dudit type.

Par sensiblement on entend que le récipient doseur permet de doser la dose de nourriture avec une erreur inférieure à une masse maximale de nourriture dudit type susceptible d'être contenue dans un volume délimité par un corps annulaire dans l'empilement formant le récipient.

Dans au moins un mode de réalisation, ce volume est le même pour les différents corps annulaires de l'ensemble.

Une fois que le récipient doseur est formé on peut servir la nourriture qu'il contient et qui correspond à la dose prédéterminée ou bien le vider et l'utiliser ultérieurement pour doser puis servir la dose prédéterminée de nourriture dudit type.

Il existe plusieurs façons de définir ce nombre C2.

Selon un moins un mode de réalisation, le procédé de formation du récipient doseur comprend les étapes suivantes :

■ Empiler C1 corps de l'ensemble de dosage, les C1 corps comprenant la base dont le fond forme un fond d'une cavité initiale et plusieurs corps de sorte à former un récipient initial délimitant la cavité initiale ouverte,
■ Peser une masse prédéterminée de nourriture dudit type,
■ Verser la masse prédéterminée de nourriture dudit type dans le premier récipient,
■ Retirer, du premier l'empilement, chaque corps annulaire non rempli de la nourriture de sorte à obtenir le récipient délimitant la cavité et comprenant C2 corps.

La masse est, par exemple, la dose prédéterminée.

Par non rempli de nourriture, on entend qui ne contient pas de nourriture.

Avantageusement, si, lorsque l'on verse la nourriture dans le premier récipient, le niveau de croquettes est plus bas que le milieu, selon l'axe x, du volume interne délimité par le col du corps annulaire rempli au moins partiellement de nourriture le plus éloigné de la base selon l'axe x, alors on retire ce corps annulaire du premier empilement de sorte à former le récipient.

Avantageusement, lorsque le niveau de nourriture est plus haut que ce milieu alors garder cet étage.

Ainsi, le récipient doseur permet de doser avec une précision inférieure ou égale à 0,5* le volume interne délimité par le col de chaque corps annulaire.

Selon au moins un autre mode de réalisation, le procédé comprend une étape de détermination d'un nombre C2 et éventuellement d'un nombre J de remplissage(s) du verre doseur à effectuer pour servir la dose de nourriture dudit type, à partir d'une masse élémentaire m de nourriture dudit type susceptible d'être contenue dans chacun des corps annulaires et de la dose.

Cette variante est simple à mettre en œuvre et permet, le cas échéant de former un récipient doseur permettant de doser une masse de nourriture égale à un multiple de la masse maximale de nourriture susceptible d'être contenue dans le récipient doseur.

La masse élémentaire de nourriture peut être prédéterminée par exemple au moyen d'un tableau de correspondance entre différents types de nourriture et la masse élémentaire de nourriture ou par le calcul comme nous le verrons dans la suite.

Selon au moins un exemple de réalisation, la masse élémentaire de nourriture dudit type susceptible d'être contenue dans chacun des corps annulaires est déterminée de la façon suivante :

- Empiler C3 corps de l'ensemble de dosage 1 selon l'une quelconque des revendications 1 à 11, les C3 corps comprenant la base dont le fond 11 forme un fond d'une cavité de départ 50 et au moins un des corps annulaires 20 de sorte à former un récipient de départ délimitant la cavité de départ ouverte,
- Remplir à ras bord le récipient de départ de nourriture dudit type, ▪ Peser la nourriture contenue dans le troisième récipient de sorte à obtenir la masse de nourriture dudit type contenue dans le récipient de départ,
- Déterminer la masse élémentaire de nourriture dudit type contenue dans un anneau du premier récipient à partir de ladite masse et de C3 ou C3-1.

C3 est un entier naturel supérieur à 1 et inférieur ou égal à N. C3 peut être égal à C1.

La masse élémentaire m est déterminée à partir de C3 lorsque la base 10 est configurée pour délimiter radialement un volume de la cavité égal au volume délimité par chacun des corps annulaires comme visible en figure 2.

La masse élémentaire m est alors égale à la masse M de nourriture dudit type contenue dans le récipient de départ divisée par C3.

C3 est égal au nombre de corps annulaires empilés pour former le récipient doseur de départ auquel on ajoute 1.

En variante, la masse élémentaire m est déterminée à partir de C3-1 lorsque la base 10 est configurée pour délimiter uniquement transversalement la cavité, comme visible en figure 5.

La masse élémentaire M est alors égale à la masse M de nourriture dudit type contenue dans le récipient de départ divisée par C3-1.

C3- 1 est le nombre de corps annulaires empilés pour former le récipient doseur de départ.

Le fait de déterminer ou de connaître la masse élémentaire permet de déterminer aisément et de façon précise le nombre C2 de corps à empiler pour former le récipient de dosage d'une dose prédéterminée de nourriture dudit type.

Elle permet d'adapter le récipient doseur sans avoir à peser à nouveau la nourriture.

L'invention se rapporte également à un procédé d'utilisation de l'ensemble de dosage pour délivrer une dose prédéterminée de la nourriture dudit type.

Ce procédé comprend le procédé de formation du récipient doseur tel que décrit précédemment.

Il comprend, la mise en œuvre un nombre de fois égal à J, de la suite d'étapes suivantes :

- Remplir à ras bord le récipient doseur de nourriture dudit type,
- Servir la nourriture contenue dans le récipient doseur.

J est un entier naturel.

J peut être prédéterminé.

J est par exemple égal à 1.

La dose de nourriture prédéterminée à servir est alors égale à J*M. En variante, on détermine J lors du procédé selon l'invention.

Ce procédé permet donc de mettre en œuvre de façon simple et précise, un procédé de rationnement lors duquel on donne pendant une période donnée, à l'animal une dose quotidienne de nourriture de type prédéterminé, par exemple de croquettes adaptée à ses besoins, constante et précise à quelques grammes près, pour lui permettre de garder une masse optimale dite "de forme".

A cet effet, on répète le procédé décrit ci-dessus, chaque jour d'une période de plusieurs jours.

Nous allons maintenant décrire un exemple de calcul de C2 à partir de la masse élémentaire m et de la dose D dans le cas où la base est configurée pour délimiter radialement une partie de la cavité.

C2 est donné par :

$$C2 = D/m.$$

On compare ensuite C2/ NM avec le chiffre 1 qui est le nombre maximum de corps susceptibles de former un récipient doseur et de contenir de la nourriture du verre doseur.

Si C2/NM est inférieur ou égal à 1 alors le nombre J est égal à 1, c'est-à-dire le nombre de récipients doseurs nécessaires pour doser et servie la dose D est de 1.

Si C2/NM est supérieur à 1 et compris entre deux nombres entiers consécutifs x et y, y étant supérieur à x et C2/NM étant supérieur à x, alors J est égal à y. Par exemple, si C2/NM est compris entre 1, 1 et 2, alors J est égal à 2.

Si C2/NM est supérieur à 1, on met à jour C2 après avoir déterminé J.

C2 est mis à jour à partir de C2 et de J.

Le nouveau nombre de corps à empiler C2n = C2/J.

Si C2n présente une valeur décimale inférieure ou égale à une valeur décimale prédéterminée alors C2 est l'arrondi à l'unité inférieure de C2n.

Si C2n présente une décimale de valeur supérieure à la valeur décimale prédéterminée alors C2 est l'arrondi à l'unité supérieure de C2n.

Par exemple, la décimale est égale à 7 ou à 5.

Alors si C2n = 2, 4 ; alors la mise à jour de C2 est égale à 2.

Et si C2n=2, 8, alors C2 est égal à 3.

Cela permet de limiter l'erreur de dosage.

Dans le cas où la base est configurée pour délimiter seulement transversalement la cavité, on met à jour C2 de sorte que le nombre C2 est égal au nombre C2 calculé auquel on retranche 1.

Dans au moins mode de réalisation, C2, C2n, C2/NM sont calculés ou arrondis au dixième près.

Le calcul des nombres C2 et J est par exemple mis en œuvre par ordinateur.

L'invention se rapporte également à un procédé d'utilisation de l'ensemble pour délivrer quotidiennement de la nourriture à un animale pendant une phase de régime.

Le régime peut être un régime amaigrissant lors duquel l'animal est destiné à perdre de la masse ou bien un régime de prise de masse lors duquel l'animal est destiné à prendre de la masse.

Le régime de prise de poids, c'est-à-dire de masse, peut être suivi lorsque la masse de l'animal est supérieure à sa masse de forme.

Le régime de prise de poids, c'est-à-dire de masse, peut être suivi lors d'une maigreur de l'animal dont la masse est inférieure à sa masse de forme ou bien lié à une phase de croissance de l'animal lors de laquelle il va prendre de la masse.

Lorsque l'animal est en situation de maigreur ou en phase de croissance, le propriétaire doit augmenter la dose journalière de façon maîtrisée jusqu'à ce que l'animal atteigne sa masse de forme (masse cible prédéterminée).

Lorsque l'animal est en situation de maigreur ou en phase de croissance, le propriétaire doit augmenter la dose journalière de façon maîtrisée jusqu'à ce que l'animal atteigne sa masse de forme (masse cible prédéterminé).

A cet effet, on va diviser la période totale de régime en P périodes de X jours ou X mois.

X est un nombre naturel supérieur ou égal à 1.

Le nombre X est avantageusement prédéterminé.

X est par exemple égal à 7 jours, 14 jours ou 28 jours. X peut être égal à 1 mois.

P est un nombre naturel supérieur à 1.

Chacun des jours de chaque période on va délivrer la même dose de nourriture à l'animal en utilisant un même récipient doseur.

Une fois les X jours ou mois écoulé(s), on passe à la période suivante (nouvelle période) et on va modifier de façon maîtrisée la dose qui sera délivrée à l'animal. Pour ce faire, on va modifier le récipient doseur en y ajoutant un ou plusieurs corps annulaires (en phase de régime de prise de poids, c'est-à-dire de masse) ou en y retirant un ou plusieurs corps annulaires (en phase de régime amaigrissant) de sorte à obtenir un nouveau récipient doseur que l'on va utiliser chaque jour de la nouvelle période pour délivrer une nouvelle quantité prédéterminée de nourriture à l'animal.

Selon au moins un mode de réalisation, le procédé pour délivrer quotidiennement de la nourriture à un animal lors d'une phase de régime débutant un premier jour lors duquel on doit servir une dose prédéterminée de nourriture dudit type à l'animal, le procédé comprenant, chaque jour d'une première période de X jours ou X mois :

- La mise en œuvre un nombre de fois égal à J, de la suite d'étapes suivantes :

  o Remplir à ras bord le récipient doseur de la période de nourriture dudit type,
  o Servir la nourriture contenue dans le récipient doseur de la période.

Le procédé comprend en outre pour chacune de P périodes consécutives de X jours suivant la première période :

- le premier jour la période :

  o Ajouter un anneau au verre doseur en cas de régime de prise de poids, c'est-à-dire de masse, de sorte à obtenir un nouveau verre doseur ou retirer un anneau au verre doseur en cas de régime amaigrissant de sorte à obtenir un récipient doseur de la période,

- chaque jour de la période lors duquel une condition prédéterminée d'arrêt n'est pas respectée :

  o La mise en œuvre un nombre de fois égal à J, de la suite d'étapes suivantes :

    - Remplir à ras bord le récipient doseur de la période de nourriture dudit type,
    - Servir la nourriture contenue dans le récipient doseur de la période.

Le régime est arrêté lorsqu'une condition prédéterminée d'arrêt est respectée, par exemple lorsqu'un nombre prédéterminé de périodes se sont écoulées ou lorsque l'animal atteint une masse cible prédéterminé.

En variante, le procédé comprend :

- le premier jour la période :

  o déterminer un nouveau nombre d'anneaux à utiliser pour former un nouveau récipient avec la base à partir d'une dose quotidienne prédéterminée à distribuer pendant ladite période et d'une masse élémentaire de nourriture dudit type susceptible d'être contenue dans chacun des corps annulaires,
  o Ajouter ou retirer un nombre d'anneaux correspondant à une différence entre le nouveau nombre d'anneaux et le nombre d'anneaux du récipient doseur de la période précédente, de sorte à obtenir un nouveau récipient,

■ chaque jour de la période lors duquel une condition prédéterminée d'arrêt n'est pas respectée :

○ La mise en œuvre, un nombre de fois égal à J de la suite d'étapes suivantes : :

■ Remplir à ras bord le récipient doseur de la période de nourriture dudit type,

Servir la nourriture contenue dans le récipient doseur de la période.

La dose prédéterminée est, par exemple, déterminée en fonction d'au moins un paramètre pris parmi les paramètres suivants : l'âge de l'animal, son stade de développement, sa masse, son statut pondéral (surpoids ou masse trop faible), sa masse de forme, son activité physique, le fait qu'il soit stérilisé ou non stérilisé.

Ainsi l'invention permet, une fois le récnipient doseur formé de doser et servir la dose de nourriture du type donné de façon aisée, rapide, répétée et fiable, uniquement en remplissant le récipient doseur de sorte que le niveau de nourriture corresponde au bord supérieur de l'étage, c'est-à-dire en remplissant le récipient à ras bord.

Une fois le récipient formé, il n'est plus nécessaire d'avoir recours à une balance ni à l'utilisation de graduation.

L'erreur de dosage est inférieure à la masse susceptible d'être contenue dans un anneau ce qui est acceptable. Elle est peut être inférieure à la moitié de la masse susceptible d'être contenue dans l'anneau selon la façon dont C2 est calculé.

La solution proposée permet également de créer de nouveaux récipients étalons à partir d'un premier récipient étalon (récipient doseur) de façon aisée, fiable et progressive en phase de régime. La solution permet donc le respect aisé de la dose de nourriture lors d'une modulation de cette dose.

Le fait que le volume élémentaire soit faible, rend l'erreur maximale de dosage compatible du nourrissage ou du suivi d'un régime d'un animal de compagnie.

**Revendications**

**1.** Ensemble de dosage (1) pour le dosage de nourriture comprenant N corps (10, 20, 30) comprenant une base (10), la base comprenant un fond (11), et une pluralité de corps annulaires (20), les N corps (10, 20, 30) étant assemblables de façon séparable par coopération de forme entre les dits corps (10, 20, 30), en étant empilés selon un axe (x), de sorte à permettre de former un récipient (100) pour le dosage de nourriture délimitant une cavité (50) destinée à recevoir de la nourriture, le récipient (100) étant constitué de C corps empilés, pris parmi les N corps, empilés selon l'axe x et assemblés de façon séparable par coopération de forme entre les C corps empilés, C étant l'un quelconque du ou des nombres entiers compris entre 2 et N, les C corps empilés comprenant la base dont le fond (11) forme un fond de la cavité (50) et au moins un des corps annulaires (20).

**2.** Ensemble de dosage (1) selon la revendication 1, dans lequel un des N corps est un couvercle (30) comprenant un capot (31) configuré et agencé de sorte que lorsque les C corps empilés comprennent le capot (31), la cavité (50) étant fermée.

**3.** Ensemble de dosage (1) selon l'une quelconque des revendications précédentes, dans lequel les corps annulaires (20) sont configurés de sorte à délimiter chacun un volume libre de même volume de la cavité et la base est configurée de sorte à délimiter seulement transversalement la cavité ou la base est configurée pour délimiter un autre volume libre de la cavité chacun des volumes libres et l'autre volume libre présentant les mêmes formes et dimensions.

**4.** Ensemble de dosage selon la revendication précédente, dans lequel le même volume est compris entre 10 ml et 40 ml et/ou le nombre N de corps est compris entre 15 et 20.

**5.** Ensemble de dosage (1) selon l'une quelconque des revendications précédentes, dans lequel les corps annulaires sont translucides.

**6.** Ensemble de dosage comprenant une majorité de corps annulaires présentant une même couleur et un ou plusieurs corps annulaires de repère présentant une deuxième couleur.

**7.** Procédé de formation d'un récipient doseur pour doser et distribuer une dose prédéterminée de nourriture d'un type prédéterminé, le procédé comprenant :

■ Empiler C2 corps de l'ensemble de dosage (1) selon l'une quelconque des revendications 1 à 6, les C2 corps comprenant la base dont le fond (11) forme un fond de la cavité (50) et au moins un des corps annulaires (20) de sorte à former le récipient doseur délimitant une cavité ouverte configurée pour recevoir sensiblement la dose prédéterminée de nourriture dudit type lorsqu'elle est remplie à ras bord de nourriture dudit type.

**8.** Procédé de formation d'un récipient doseur selon la revendication précédente, le procédé comprenant :

■ Empiler C1 corps de l'ensemble de dosage (1) selon l'une quelconque des revendications 1 à 6, les C1 corps comprenant la base dont le fond (11) forme un fond d'une cavité initiale (50) et au moins un des corps annulaires (20) de sorte à former un récipient initial délimitant la cavité initiale ouverte,

■ Peser une masse prédéterminée de nourriture dudit type,

■ Verser la masse prédéterminée de nourriture dudit type dans le premier récipient,

■ Retirer, du premier l'empilement, chaque corps annulaire non rempli de la nourriture de sorte à obtenir le récipient délimitant la cavité comprenant C2 corps où C2 est inférieur ou égal à C1,

9. Procédé de formation d'un récipient doseur selon l'une quelconque des revendications 7 à 8, dans lequel le volume délimité et entouré par chacun des corps annulaires est identique, le procédé comprenant :

■ Déterminer le nombre C2 et éventuellement le nombre de remplissage du verre doseur à effectuer pour servir la dose de nourriture dudit type, à partir d'une masse élémentaire de nourriture dudit type susceptible d'être contenue dans chacun des corps annulaires et de la dose.

10. Procédé de formation d'un récipient doseur selon la revendication précédente, comprenant :

■ déterminer une masse élémentaire de nourriture dudit type susceptible d'être contenue dans chacun des corps annulaires comprenant :

■ Empiler C3 corps de l'ensemble de dosage (1) selon l'une quelconque des revendications 1 à 6, les C3 corps comprenant la base dont le fond (11) forme un fond d'une cavité de départ et au moins un des corps annulaires (20) de sorte à former un récipient de départ délimitant la cavité de départ,

■ Remplir à ras bord le récipient de départ de nourriture dudit type,

■ Peser la nourriture contenue dans le récipient de départ de sorte à obtenir la masse de nourriture dudit type contenue dans le récipient de départ,

■ Déterminer la masse élémentaire de nourriture dudit type contenue dans un anneau du premier récipient à partir de ladite masse et de C3 ou C3-1.

11. Procédé de formation d'un récipient doseur selon la revendication 8, comprenant :

■ déterminer la quantité élémentaire de nourriture susceptible d'être contenue dans chacun des corps annulaires comprenant :

■ diviser la masse prédéterminée de nourriture par C2 ou par C2 - 1.

12. Procédé pour délivrer la dose prédéterminée de nourriture dudit type, comprenant le procédé de formation du récipient doseur selon l'une quelconque des revendications 8 à 11 et comprenant en outre mise en œuvre de J fois la suite d'étapes suivantes :

■ Remplir à ras bord le récipient doseur de nourriture dudit type,

■ Servir la nourriture contenue dans le récipient doseur.

13. Procédé pour délivrer quotidiennement de la nourriture à un animal lors d'une phase de régime débutant un premier jour lors duquel on doit servir la dose prédéterminée de nourriture dudit type à l'animal, le procédé comprenant, chaque jour d'une première période de Xjours, le procédé selon la revendication précédente,
le procédé comprenant en outre pour chacune de P périodes consécutives de X jours suivant la première période :

■ le premier jour la période :

o Ajouter un anneau au verre doseur en cas de régime de prise de masse de sorte à obtenir un nouveau verre doseur ou retirer un anneau au verre doseur en cas de régime amaigrissant de sorte à obtenir un récipient doseur de la période,

■ chaque jour de la période lors duquel une condition prédéterminée d'arrêt n'est pas respectée :

o La mise en œuvre de J fois de la suite d'étapes suivantes :

■ Remplir à ras bord le récipient doseur de la période de nourriture dudit type,

■ Servir la nourriture contenue dans le récipient doseur de la période.

14. Procédé pour délivrer quotidiennement de la nourriture à un animal lors d'une phase de régime selon la revendication précédente, le procédé comprenant en outre pour chacune de P périodes consécutives de X jours ou mois suivant la première période :

■ le premier jour la période :

o déterminer un nouveau nombre d'anneaux à utiliser pour former un nouveau récipient avec la base à partir d'une dose quotidienne prédéterminée à distribuer pendant ladite période et d'une masse élémentaire de nourriture dudit type susceptible d'être contenue dans chacun des corps annulaires,

o Ajouter ou retirer un nombre d'anneaux correspondant à une différence entre le nouveau nombre d'anneaux et le nombre d'anneaux du récipient doseur de la période précédente, de sorte à obtenir un nouveau récipient,

- chaque jour de la période lors duquel une condition prédéterminée d'arrêt n'est pas respectée :

o La mise en œuvre de J fois de la suite d'étapes suivantes :

- Remplir à ras bord le récipient doseur de la période de nourriture dudit type,
- Servir la nourriture contenue dans le récipient doseur de la période.

FIG. 1

FIG. 2

FIG. 3

FIG. 4

FIG. 5

# EP 4 682 482 A1

Europäisches
Patentamt

European
Patent Office

Office européen
des brevets

## RAPPORT DE RECHERCHE EUROPEENNE

**Numéro de la demande**

**EP 25 18 9992**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 210 513 308 U (JIANGXI COPPER CORP) 12 mai 2020 (2020-05-12) * le document en entier * * figures 1-3 * | 1-3,7,8, 12 | INV. G01F19/00 ADD. B65D21/08 |
| X | US 2016/075473 A1 (STUART CHRISTOPHER [US] ET AL) 17 mars 2016 (2016-03-17) * alinéa [0038] * * alinéa [0046] * * alinéa [0053] - alinéa [0063] * * figures 1-20 * | 1-4 | |
| X | US 2013/092693 A1 (BRENNAN ALEXANDER T [US] ET AL) 18 avril 2013 (2013-04-18) * figures 1,2 * * alinéa [0012] - alinéa [0017] * | 1-5 | |
| X | WO 2012/075567 A1 (SULJAK JOE [CA]; KERR JEFF) 14 juin 2012 (2012-06-14) * alinéa [0023] - alinéa [0042] * * figures 1-14 * | 1,2,7-14 | DOMAINES TECHNIQUES RECHERCHES (IPC) |
| X | US 2008/035646 A1 (SMITH MICHAEL S [US]) 14 février 2008 (2008-02-14) * alinéa [0030] - alinéa [0055] * * figures 1-10 * | 1,2,5 | G01F B65D A01K |
| X | US 2004/262306 A1 (SMITH STEVEN W [US]) 30 décembre 2004 (2004-12-30) * alinéa [0019] * * alinéa [0024] * * figures 1,3 * | 1,2,6 | |

-/--

Le présent rapport a été établi pour toutes les revendications

| Lieu de la recherche | Date d'achèvement de la recherche | Examinateur |
|---|---|---|
| La Haye | 3 octobre 2025 | Verdoodt, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...............................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 25 18 9992

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 228 737 B2 (LEGAKIS NICHOLAS [US]; LEGAKIS LORETTA M [US]; EDWARDS LINDA [US]) 5 janvier 2016 (2016-01-05) * colonne 1, ligne 60 - colonne 3, ligne 35 * * figures 1-7 * ----- | 1,3,4 | |
| X | CA 2 738 412 A1 (LACOURSIERE MARK [CA]) 28 octobre 2012 (2012-10-28) * alinéa [0004] – alinéa [0005] * * figures 1-4 * ----- | 1-4,7-14 | |
| E | WO 2025/192805 A1 (KIM GUN SIK [KR]) 18 septembre 2025 (2025-09-18) * le document en entier * ----- | 1-7 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 3 octobre 2025 | Verdoodt, Erik |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

    ...........................................................................
& : membre de la même famille, document correspondant

EPO FORM 1503 03.82 (P04C02)

page 2 de 2

**EP 4 682 482 A1**

## ANNEXE AU RAPPORT DE RECHERCHE EUROPEENNE
## RELATIF A LA DEMANDE DE BREVET EUROPEEN NO.

EP 25 18 9992

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-10-2025

| Document brevet cité au rapport de recherche | | Date de publication | Membre(s) de la famille de brevet(s) | | Date de publication |
|---|---|---|---|---|---|
| CN 210513308 | U | 12-05-2020 | AUCUN | | |
| US 2016075473 | A1 | 17-03-2016 | AUCUN | | |
| US 2013092693 | A1 | 18-04-2013 | AUCUN | | |
| WO 2012075567 | A1 | 14-06-2012 | US | 2013270264 A1 | 17-10-2013 |
| | | | WO | 2012075567 A1 | 14-06-2012 |
| US 2008035646 | A1 | 14-02-2008 | AUCUN | | |
| US 2004262306 | A1 | 30-12-2004 | AUCUN | | |
| US 9228737 | B2 | 05-01-2016 | US | 2009029304 A1 | 29-01-2009 |
| | | | US | 2015064634 A1 | 05-03-2015 |
| CA 2738412 | A1 | 28-10-2012 | AUCUN | | |
| WO 2025192805 | A1 | 18-09-2025 | AUCUN | | |

EPO FORM P0460

Pour tout renseignement concernant cette annexe : voir Journal Officiel de l'Office européen des brevets, No.12/82